# EUROPEAN PATENT APPLICATION

(11) **EP 4 679 590 A1**
(43) Date of publication of application: **14.01.2026**
(21) Application number: 25181009.9
(22) Date of filing: 05.06.2025
(51) Int. Cl.: H01M 50/207, H01M 50/244, H01M 50/291

(54) **BATTERY MODULE AND BATTERY PACK**

(30) Priority: 17.06.2024 CN 202421380483 U
(71) Applicant: AESC Japan Ltd., Yokohama-Shi, Kanagawa 220-0012 (JP)
(72) Inventor: MENG, Ziwei, Pudong New Area Shanghai, Shanghai 201315 (CN); LI, Dengke, Pudong New Area Shanghai, Shanghai 201315 (CN); HE, Yafei, Pudong New Area Shanghai, Shanghai 201315 (CN)
(74) Representative: Becker, Eberhard

(57) **Abstract**

A battery module and a battery pack are provided. The battery module includes two end plate assemblies (100) spaced apart in a first direction and a middle plate (200) connected between the two end plate assemblies (100). The middle plate (200) includes a partition portion (210) and a connection portion (220) distributed in a straight line in the first direction and in a same plane. The middle plate (200) is inserted into and fitted with the corresponding end plate assembly (100) at least through the connection portion (220). At least one side plate surface of the partition portion (210) has a light shielding structure (300) protruding from a plate surface of the connection portion (220). The light shielding structure (300) is arranged on at least one side plate surface of the partition portion (210).

## Description

### BACKGROUND

### Technical Field

The disclosure relates to the technical field of power batteries, and in particular, relates to a battery module and a battery pack.

### Description of Related Art

In the related art, a battery module (e.g., a square shell battery module) includes an end plate and a middle plate that are connected to each other. Typically, in the related art, the middle plate is inserted into an insertion hole on the end plate, and the end plate and the middle plate are fixedly connected through welding.

However, in the related art, the middle plate is formed by stamping and bending a metal profile, which will experience a certain degree of spring-back deformation after forming. Low fitting accuracy may thus be provided between the deformed middle plate of the related art and the insertion hole, and a large gap may appear between the two, so the subsequent welding process and the overall safety of the battery module may thus be adversely affected.

### SUMMARY

Accordingly, the disclosure aims to provide a battery module and a battery pack.

Based on the above, in the first aspect, the disclosure provides a battery module including two end plate assemblies spaced apart in a first direction and a middle plate connected between the two end plate assemblies. The middle plate includes a partition portion and a connection portion distributed in a straight line in the first direction and in a same plane. The middle plate is inserted into and fitted with the corresponding end plate assembly at least through the connection portion. At least one side plate surface of the partition portion has a light shielding structure protruding from a plate surface of the connection portion.

Optionally, each end plate assembly includes an end plate body provided with a connection through hole. The connection through hole includes an insertion hole section and a guide hole section. The connection portion is inserted into and fitted with the end plate body through the insertion hole section, and the partition portion extends into the guide hole section. At least a portion of the light shielding structure is located in the guide hole section.

Optionally, the end plate body is provided with a guide groove at a position of the guide hole section, and the guide groove corresponds to at least a side plate surface of the partition portion.

Optionally, the guide groove and the light shielding structure are located at a same side of the partition portion.

Optionally, the end plate body includes a first sub-plate body and a second sub-plate body which are linearly spaced and independent from each other in a second direction. The first sub-plate body and the second sub-plate body are fixedly connected, and an insertion space is defined between the first sub-plate body and the second sub-plate body. The connection portion is inserted into and fitted with the end plate body through the insertion space. The second direction intersects with the first direction.

Optionally, side walls of the first sub-plate body and the second sub-plate body that are close to each other are spaced apart as a whole to define a gap extending from an upper end to a lower end of the end plate body between the first sub-plate body and the second sub-plate body. The gap is constructed as the insertion space.

Optionally, middle portions of side walls of the first sub-plate body and the second sub-plate body that are close to each other are spaced apart to define a through hole between the first sub-plate body and the second sub-plate body. The through hole is constructed as the insertion space.

Optionally, the partition portion is located outside the insertion space.

Optionally, in the first direction, the connection portion is inserted into the insertion space through a side opening of the insertion space. In the insertion space, a welding space is formed at a position between an end portion of the connection portion and another side opening of the insertion space.

Optionally, a welding groove is provided at a position where the first sub-plate is located in the welding space and/or a position where the second sub-plate is located in the welding space.

Optionally, the light shielding structure includes a light shielding sheet, and the light shielding sheet is fixed on a plate surface of the partition portion.

Optionally, in the partition portion, at least a portion adjacent to the connection portion has a thickness greater than a thickness of the connection portion to form a step surface, and the light shielding structure includes the step surface.

Based on the same inventive concept, in the second aspect, the disclosure further provides a battery pack including the battery module as described in the first aspect.

As can be seen from the above, in the battery module and the battery pack provided by the disclosure, the partition portion and the connection portion of the middle plate are arranged in a straight line, so the middle plate is formed by stamping and cutting. In this way, the middle plate is ensured to exhibit improved contour accuracy, an assembly gap between the middle plate and the end plate assembly is reduced, and welding quality between the middle plate and the end plate assembly is further ensured. Further, the light shielding structure is arranged on at least one side plate surface of the partition portion. During welding, even if laser penetrates through the assembly gap, it is blocked by the light shielding structure, so the problem of internal components of the battery module being damaged by laser exposure during welding is avoided. The overall safety of the battery module is therefore ensured

### BRIEF DESCRIPTION OF THE DRAWINGS

In order to more clearly explain the technical solutions in the disclosure or related art, the drawings required in the description of the embodiments or related art are to be briefly introduced below. Obviously, the drawings described in the following paragraphs are merely embodiments of the disclosure. For a person having ordinary skill in the art, other drawings may be obtained based on these drawings without inventive labor.
FIG. 1 is a perspective schematic view of a first structure of a battery module according to an embodiment of the disclosure.
FIG. 2 is a perspective schematic diagram of a first structure of a module frame of the battery module according to an embodiment of the disclosure.
FIG. 3 is an exploded schematic view of the first structure of the battery module according to an embodiment of the disclosure.
FIG. 4 is a top cross-sectional schematic view of the first structure of the module frame of the battery module according to an embodiment of the disclosure.
FIG. 5 is an enlarged schematic view of the first structure of portion A in FIG. 4.
FIG. 6 is an enlarged schematic view of a second structure of portion A in FIG. 4.
FIG. 7 is an enlarged schematic view of a third structure of portion A in FIG. 4.
FIG. 8 is an enlarged schematic view of a fourth structure of portion A in FIG. 4.
FIG. 9 is an enlarged schematic view of a fifth structure of portion A in FIG. 4.
FIG. 10 is an enlarged schematic view of a sixth structure of portion A in FIG. 4.
FIG. 11 is a perspective schematic view of a second structure of the battery module according to an embodiment of the disclosure.
FIG. 12 is a perspective schematic diagram of a second structure of the module frame of the battery module according to an embodiment of the disclosure.
FIG. 13 is an exploded schematic view of the second structure of the battery module according to an embodiment of the disclosure.
FIG. 14 is a perspective schematic diagram of a first structure of an insertion space of the battery module according to an embodiment of the disclosure.
FIG. 15 is a perspective schematic diagram of a second structure of the insertion space of the battery module according to an embodiment of the disclosure.
FIG. 16 is a top cross-sectional schematic view of the second structure of the module frame of the battery module according to an embodiment of the disclosure.
FIG. 17 is an enlarged schematic view of a first structure of portion B in FIG. 16 before welding.
FIG. 18 is an enlarged schematic view of the first structure of portion B in FIG. 16 after welding.
FIG. 19 is an enlarged schematic view of a second structure of portion B in FIG. 16.

Schematic views of the embodiments of the disclosure

### DESCRIPTION OF THE EMBODIMENTS

In order to make the purpose, technical solutions, and advantages of this application more clear and understandable, the disclosure is further described in detail in combination with specific embodiments and with reference to the accompanying drawings.

It should be noted that the relative arrangement of the components, the numerical expressions, and numerical values set forth in these embodiments do not limit the scope of the disclosure unless specifically stated otherwise.

Meanwhile, it should be understood that, for the convenience of description, the dimensions of various parts shown in the accompanying drawings are not drawn in an actual proportional relationship.

The following description of at least one exemplary embodiment is merely illustrative in nature and is in no way intended to limit the disclosure and its application or uses in any way.

It should be noted that, unless otherwise defined, the technical terms or scientific terms used in the embodiments of the disclosure should be understood in the general sense by a person having ordinary skill in the art. The words "first", "second", and similar words used in the embodiments of the disclosure do not indicate any order, quantity, or importance, but are only used to distinguish different components. Words such as "include" or "contain" mean that the elements or objects appearing before the word cover the elements or objects listed after the word and their equivalents, without excluding other elements or objects. Words such as "connect" or "connected" are not limited to physical or mechanical connections, but may include electrical connections, whether direct or indirect. "Up", "down", "left", "right", etc. are only used to indicate relative positional relationships, and when the absolute position of the described object changes, the relative positional relationship may also change accordingly.

The Applicant has found through research that the reason why a middle plate in the related art undergoes spring-back deformation is that it is subjected to significant stress during the stamping, bending, and forming processes, and deformation is thereby produced. After forming, the stress in the middle plate of the related art is partially released, resulting in a certain degree of spring-back. In other words, the spring-back deformation of the middle plate of the related art after forming is caused by the stamping and bending processes.

After the middle plate of the related art experiences spring-back deformation, its contour accuracy decreases. When the middle plate is inserted into an insertion hole on an end plate of the related art, the shape of the middle plate of the related art and the shape of the insertion hole may become mismatched, resulting in a large gap between the portion of the middle plate of the related art located in the insertion hole and the hole wall of the insertion hole. Generally, the middle plate of the related art and the end plate of the related art are connected by means of laser self-melting welding. When a large gap appears in the insertion hole, the laser may easily penetrate through the gap and enter the interior of a battery module of the related art, and a cell inside the battery module of the related art is thus adversely affected.

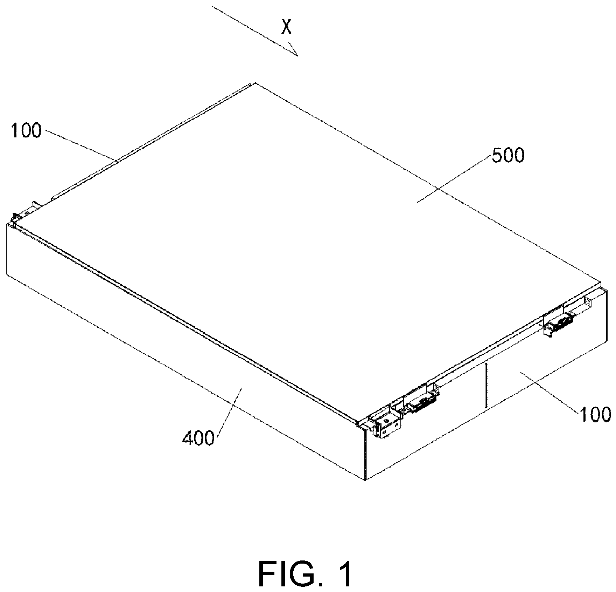

To avoid the above problems, the embodiments of the disclosure provide a battery module. As shown in FIG. 1, FIG. 1 displays a perspective schematic view of a battery module. The battery module includes two end plate assemblies 100 spaced apart in a first direction (e.g., X direction in FIG. 1). Exemplarily, the battery module also includes two side plates 400, and the two side plates 400 and the two end plate assemblies 100 together form a circumferential frame of the battery module. A module upper cover 500 is also arranged on top of the circumferential frame.

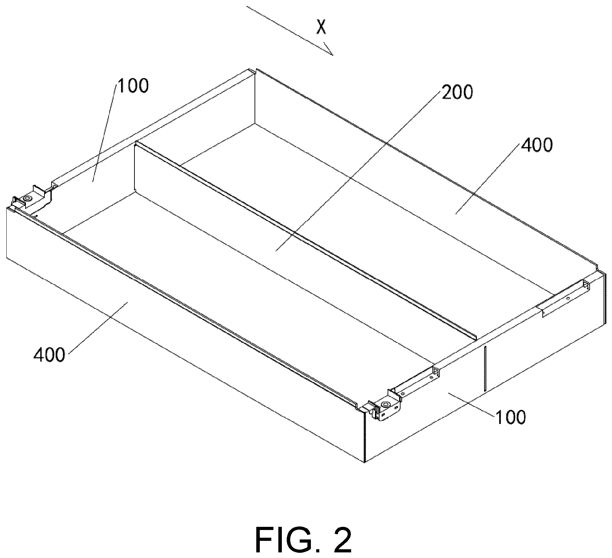

As shown in FIG. 2, FIG. 2 displays a perspective schematic view of the module frame of the battery module. The module frame includes the circumferential frame and a middle plate 200, with the middle plate 200 located inside the circumferential frame. Exemplarily, the middle plate 200 may be parallel with the side plates 400.

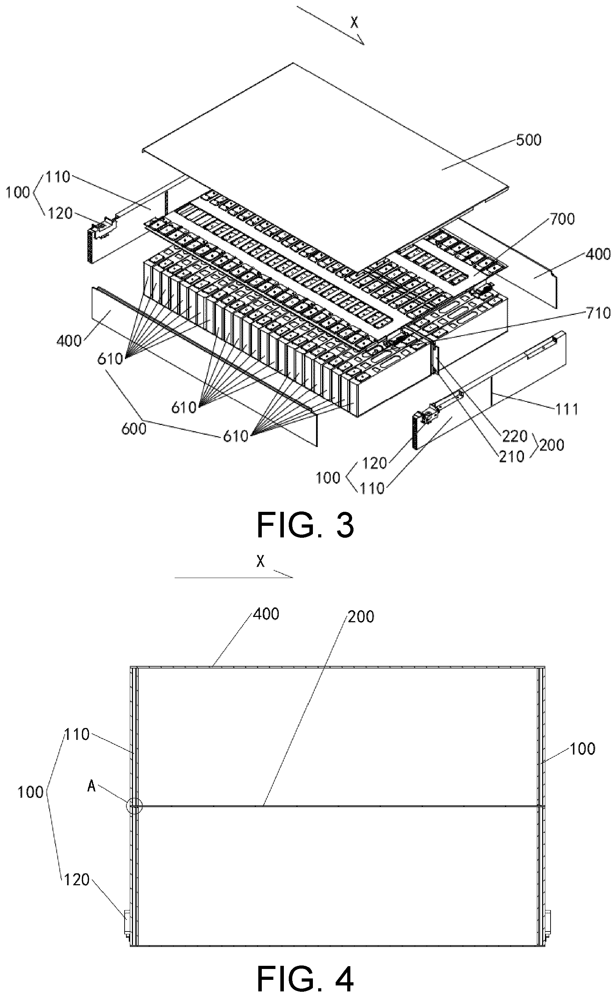

As shown in FIG. 3, FIG. 3 displays an exploded schematic view of the battery module. Exemplarily, two cell groups 600 may be arranged inside the module frame, with the cell groups 600 located between the middle plate 200 and the side plates 400. Each cell group 600 includes a plurality of cells 610 arranged in the first direction. A module sheet 700 (or called a busbar) is also arranged above the cell group 600, and the module sheet 700 has electrode output terminals 710 (including a positive output terminal and a negative output terminal) extending outside the module frame.

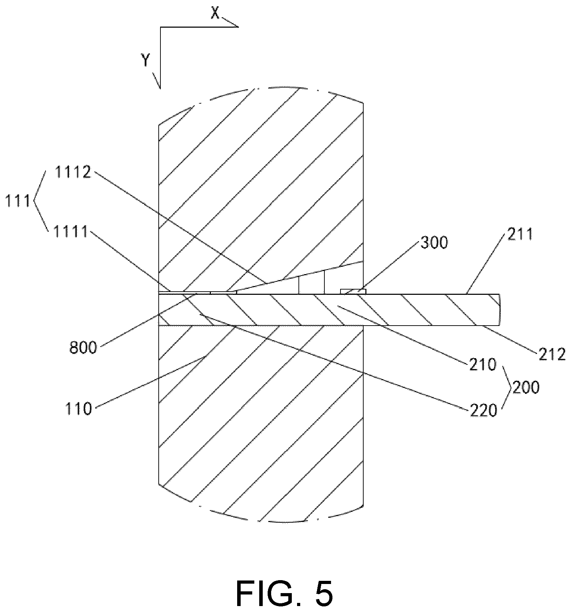

As shown in FIG. 4, FIG. 4 displays a top cross-sectional schematic view of the module frame. The middle plate 200 is connected between the two end plate assemblies 100. Specifically, as shown in FIG. 5, FIG. 5 displays an enlarged schematic view of a first structure of portion A in FIG. 4. The middle plate 200 includes a partition portion 210 and a connection portion 220 distributed in a straight line in the first direction and in a same plane and inserted into and fitted with the corresponding end plate assembly 100 at least through the connection portion 220. At least one side plate surface of the partition portion 210 has a light shielding structure 300 protruding from a plate surface of the connection portion 220.

Exemplarily, the partition portion 210 and the connection portion 220 may be located in the same vertical plane, and this plane intersects with the two end plate assemblies 100.

Exemplarily, as shown in FIG. 3, connection portions 220 are arranged at both ends of the partition portion 210 in the first direction. The two connection portions 220 are inserted into and fitted with the corresponding end plate assemblies 100.

Exemplarily, as shown in FIG. 3, the partition portion 210 is located between the two cell groups 600 to separate the two cell groups 600.

Since the partition portion 210 and the connection portion 220 included in the middle plate 200 are distributed in a straight line in the same plane, the middle plate 200 may be formed by stamping and cutting a straight plate profile (e.g., 5 series aluminum profile). Since the middle plate 200 formed by stamping and cutting is not bent, spring-back deformation is not produced after forming, so improved contour accuracy is ensured. After the connection portion 220 and the end plate assembly 100 are fit together, due to the improved contour accuracy of the connection portion 220 of the middle plate 200, the connection portion 220 and the end plate assembly 100 may achieve improved assembly accuracy. In other words, an assembly gap 800 between the connection portion 220 and the end plate assembly 100 is smaller.

When laser self-melting welding is performed, on one hand, it is easy to ensure reliable connection between the connection portion 220 and the end plate assembly 100, and on the other hand, the laser is not likely to penetrate through the smaller assembly gap 800 into the interior of the battery module. Further, taking the direction in FIG. 5 as an example for further explanation, the right side of the connection portion 220 is the partition portion 210, in other words, the right side of the connection portion 220 is closer to the interior of the battery module. Correspondingly, the left side of the connection portion 220 is closer to the exterior of the battery module. The light shielding structure 300 arranged on the plate surface of the partition portion 210 is closer to the interior of the battery module relative to the connection portion 220. During welding, even if laser penetrates through the assembly gap 800 from the exterior of the battery module, it is blocked by the light shielding structure 300, so the probability of laser entering the interior of the battery module is further reduced. As such, the phenomenon of the cells 610 being adversely affected due to the welding process may be further improved.

In the battery module provided in this embodiment, the partition portion 210 and the connection portion 220 of the middle plate 200 are arranged in a straight line in the same plane, so the middle plate 200 can be formed by stamping and cutting. In this way, the middle plate 200 exhibits improved contour accuracy, the assembly gap 800 between the middle plate 200 and the end plate assembly 100 is reduced, and the welding quality between the middle plate 200 and the end plate assembly 100 is ensured. Further, the light shielding structure 300 is provided on at least one side plate surface of the partition portion 210. During welding, even if laser penetrates through the assembly gap 800, it can be blocked by the light shielding structure 300, so the problem of internal components of the battery module being damaged by laser exposure during welding is avoided.

As shown in FIG. 5, the partition portion 210 includes a first plate surface 211 and second plate surface 212 opposite to each other. The light shielding structure 300 may be arranged on the first plate surface 211. It may be understood that when assembling the middle plate 200 and the end plate assembly 100, one side of the connection portion 220 closer to the second plate surface 212 may be made to fit with the end plate assembly 100. Herein, the assembly gap 800 is located on one side of the connection portion 220 closer to the first plate surface 211, and the light shielding structure 300 on the first plate surface 211 may more reliably block the laser that penetrates through the assembly gap 800.

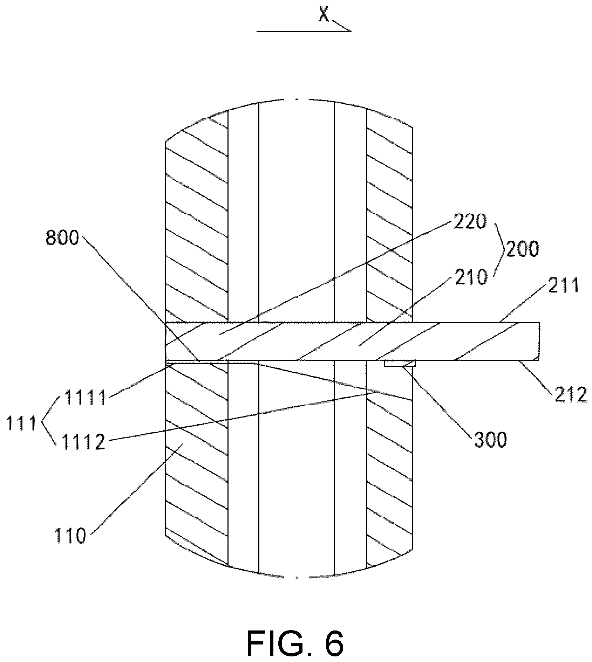

As shown in FIG. 6, FIG. 6 displays an enlarged schematic view of a second structure of portion A. The light shielding structure 300 may also be arranged on the second plate surface 212. It may be understood that when assembling the middle plate 200 and the end plate assembly 100, one side of the connection portion 220 closer to the first plate surface 211 may be made to fit with the end plate assembly 100. Herein, the assembly gap 800 is located on one side of the connection portion 220 closer to the second plate surface 212, and the light shielding structure 300 on the second plate surface 211 may more reliably block the laser that penetrates through the assembly gap 800.

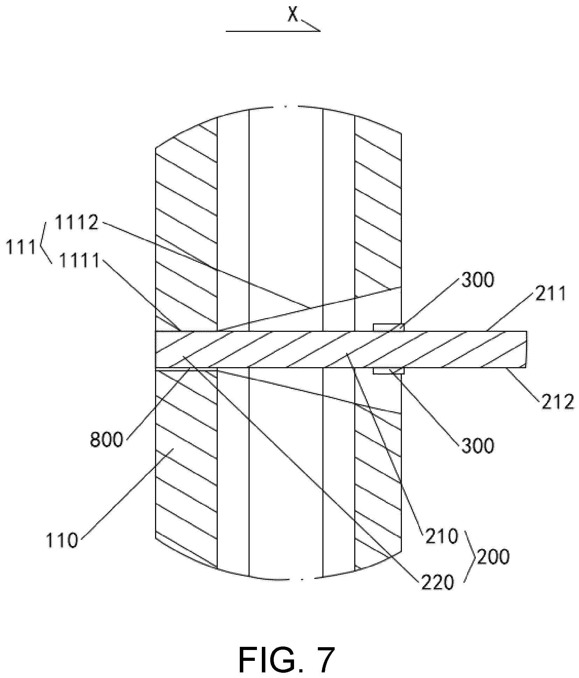

As shown in FIG. 7, FIG. 7 displays an enlarged schematic view of a third structure of portion A. Light shielding structures 300 may be arranged on both the first plate surface 211 and the second plate surface 212. Regardless of whether the assembly gap 800 is located on the side of the connection portion 220 closer to the first plate surface 211 or on the side of the connection portion 220 closer to the second plate surface 212, the light shielding structure 300 at the same side can block the laser that penetrates through the assembly gap 800.

As shown in FIG. 5, in some embodiments, the end plate assembly 100 includes an end plate body 110 provided with a connection through hole 111. The connection through hole 111 includes an insertion hole section 111 and a guide hole section 1112. The connection portion 220 is inserted into and fitted with the end plate body 110 through the insertion hole section 1111, and the partition portion 210 extends into the guide hole section 1112. At least a portion of the light shielding structure 300 is located in the guide hole section 1112.

Exemplarily, as shown in FIG. 3, the end plate assembly 100 further includes an output terminal base 120. The output terminal base 120 may be connected to a top portion of the end plate body 110, and the output terminal base 120 is used to support the electrode output terminals 710 of the battery module. Typically, the output terminal base 120 may be made of an insulating material (e.g., plastic).

It needs to be explained that in a thickness direction of the middle plate 200 (e.g., Y direction in FIG. 5), a size of the guide hole section 1112 is greater than a size of the insertion hole section 1111, so that the guide hole section 1112 may accommodate the light shielding structure 300.

It also needs to be explained that since the connection portion 220 is inserted into and fitted with the insertion hole section 1111, it may be understood that a cross-sectional shape and the size of the insertion hole section 1111 match a cross-sectional shape and a size of the connection portion 220. Combined with the aforementioned content, since the middle plate 200 formed by stamping and cutting exhibits improved contour accuracy, an interference amount between the connection portion 220 and the insertion hole section 1111 may be designed to be 0.1mm to 0.3mm. After the connection portion 220 is inserted into the insertion hole section 1111, the actual assembly gap 800 formed between the two may reach a level of less than 0.2mm.

At least a portion of the light shielding structure 300 is located in the guide hole section 1112, and this portion does not occupy an internal space of the battery module. In this way, at least the problem of reduced internal space of the battery module caused by arrangement the light shielding structure 300 and leading to crowded device arrangement is improved to some extent.

In some embodiments, the end plate body 110 may be made of a 6 series aluminum profile, and the middle plate 200 may be made of a 5 series aluminum profile.

In combination with the above content, it can be known that the end plate body 110 and the middle plate 200 can be fixedly connected by laser self-melting welding. The Applicant has found that if both the end plate body 110 and the middle plate 200 are prepared using a 6 series aluminum profile, welding cracks may occur during laser self-melting welding between the two, resulting in lower welding reliability. However, if the end plate body 110 is prepared using a 6 series aluminum profile and the middle plate 200 is prepared using 5 series aluminum profile, the number of welding cracks can be effectively reduced during laser self-melting welding between the two, and the welding reliability is thus improved.

As shown in FIG. 5, in some embodiments, the end plate body 110 is provided with a guide groove at a position of the guide hole section 1112, and the guide groove corresponds to at least a side plate surface of the partition portion 210.

Since a guide groove is arranged in the guide hole section 1112, a hole wall in the thickness direction of the middle plate 200 in the guide hole section 1112 forms an inclined surface. After the connection portion 220 enters the guide hole section 1112, this side wall may guide the connection portion 220, facilitating the alignment of the connection portion 220 with the insertion hole section 1111, so that the connection portion 220 may enter the insertion hole section 1111 more smoothly, and assembly difficulty is thus lowered.

As shown in FIG. 5, in some embodiments, the guide groove and the light shielding structure 300 are located at a same side of the partition portion 210.

From FIG. 5, it can be seen that on the side with the guide groove, a gap between the hole wall of the guide hole section 1112 and the plate surface of the partition portion 210 is larger. During welding, the probability of laser passing through the connection through hole 111 from this side is higher. On the side without the guide groove, the hole wall of the guide hole section 1112 may fit closely with the plate surface of the partition portion 210. During welding, the probability of laser passing through the connection through hole 111 from this side is smaller. Therefore, by arranging the light shielding structure 300 at the guide groove, the light shielding structure 300 may more reliably block the laser passing through the connection through hole 111. Further, interference between the light shielding structure 300 and the hole wall of the guide hole section 1112, which may hinder the insertion of the connection portion 220 into the insertion hole section 1111, may also be avoided. In this way, it is ensured that a depth of the connection portion 220 inserted into the insertion hole section 1111 meets process requirements, and welding quality is thus ensured.

For the specific formation method of the light shielding structure 300, as shown in FIG. 7, in some embodiments, the light shielding structure 300 includes a light shielding sheet fixed on the plate surface of the partition portion 210.

Exemplarily, the light shielding sheet may be an aluminum sheet.

Exemplarily, the light shielding sheet may be connected to the partition portion 210 through welding, inserting, adhering, or fastener connection methods.

By connecting the light shielding sheet to the partition portion 210 of the middle plate 200, the light shielding structure 300 is formed on the plate surface of the partition portion 210. This approach can make the thicknesses of the connection portion 220 and the partition portion 210 of the middle plate 200 the same. The position of the light shielding structure 300 on the partition portion 210 may be flexibly adjusted according to the actual situation at the assembly site, so that the light shielding structure 300 may more reliably block the laser passing through the insertion hole section 1111.

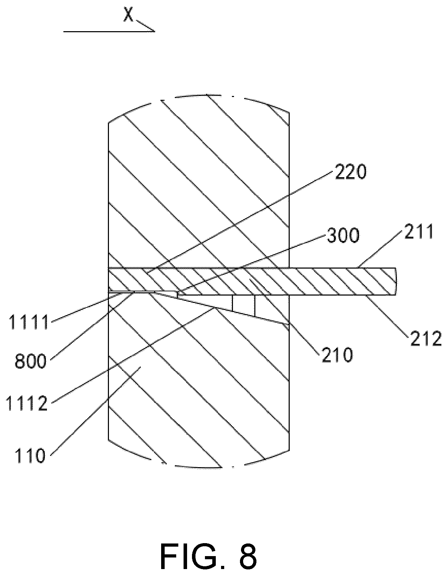

In addition to being formed through the above method, the light shielding structure 300 may also be implemented by forming a thickness difference between the connection portion 220 and the partition portion 210. Specifically, as shown in FIG. 8, FIG. 8 displays an enlarged schematic view of a fourth structure of portion A in FIG. 4. In some embodiments, in the partition portion 210, at least the thickness of the portion adjacent to the connection portion 220 is greater than the thickness of the connection portion 220 to form a step surface, and the light shielding structure 300 includes the step surface.

Exemplarily, the thickness of the partition portion 210 may be uniform. Alternatively, in the partition portion 210, the thickness of the portion adjacent to the connection portion 220 may be greater than the thickness of other portions.

Exemplarily, the thickness of the connection portion 220 may be reduced by thinning treatment to form the step surface.

As shown in FIG. 8, the size and thickness of the insertion hole section 1111 match the size of the connection portion 220. Therefore, when laser passes through the insertion hole section 1111, it is blocked by the step surface between the connection portion 220 and the partition portion 210, so the laser is prevented from entering the interior of the battery module.

By forming the step surface between the connection portion 220 and the partition portion 210 to constitute the light shielding structure 300, the process of adding structural components on the partition portion 210 may be eliminated. In other words, when the middle plate 200 is formed, the light shielding structure 300 is already formed, so the assembly process of the battery module is simplified, and assembly difficulty is lowered.

As shown in FIG. 8, the step surface may only be formed on the second plate surface 212 of the partition portion 210.

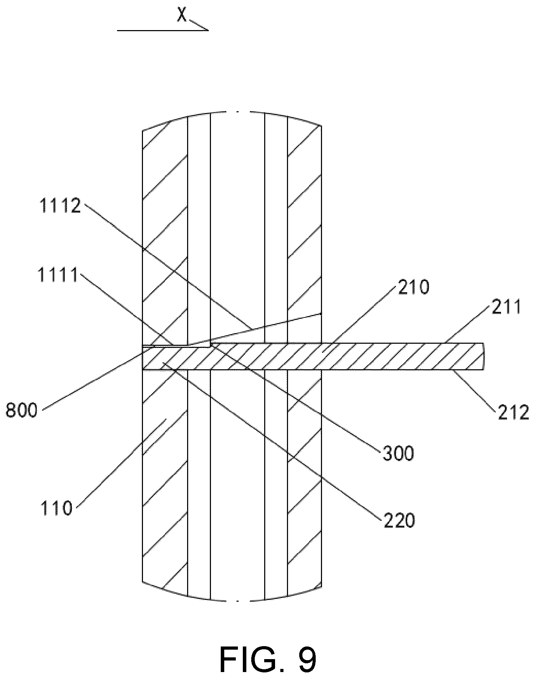

As shown in FIG. 9, FIG. 9 displays an enlarged schematic view of a fifth structure of portion A in FIG. 4. The step surface may only be formed on the first plate surface 211 of the partition portion 210.

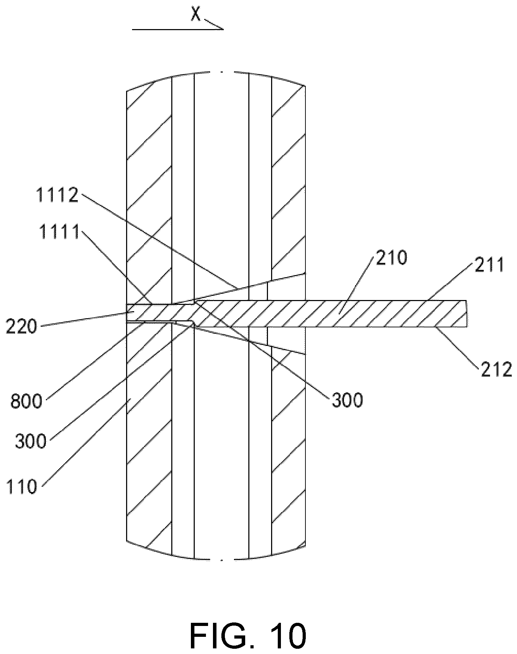

As shown in FIG. 10, FIG. 10 displays an enlarged schematic view of a sixth structure of portion A in FIG. 4. Step surfaces may be formed together on the first plate surface 211 and the second plate surface 212 of the partition portion 210.

It should be noted that the light shielding structure 300 may include the light shielding sheet, the light shielding structure 300 may include the step surface, or the light shielding structure 300 may also include both the light shielding sheet and the step surface.

The Applicant has found that when a hole size of the connection through hole 111 is close to a cross-sectional size of the connection portion 220, it makes the connection portion 220 difficult to align with the hole of the connection through hole 111, so the middle plate 200 may not be conveniently inserted into and fitted with the end plate body 110.

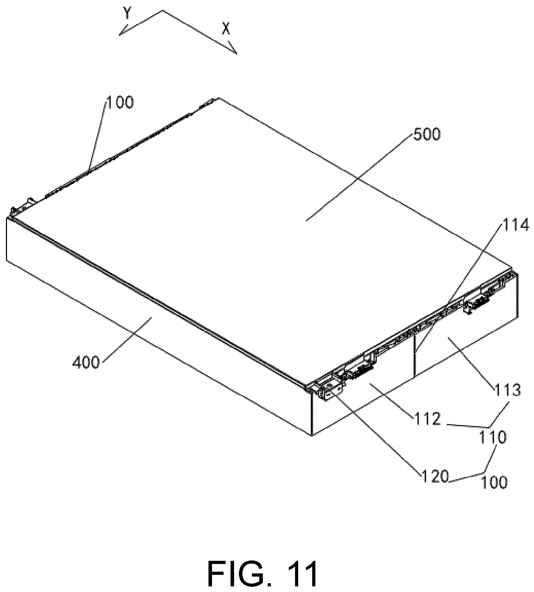

To solve the above problem, as shown in FIG. 11, FIG. 11 displays a perspective schematic view of another structure of the battery module. In some embodiments, the end plate body 110 includes a first sub-plate body 112 and a second sub-plate body 113 which are linearly spaced and independent from each other in a second direction (e.g., Y direction in FIG. 11). The first sub-plate body 112 and the second sub-plate body 113 are fixedly connected, and an insertion space 114 is defined between the first sub-plate body 112 and the second sub-plate body 113. The connection portion 220 is inserted into and fitted with the end plate body 110 through the insertion space 114. The second direction intersects with the first direction.

Exemplarily, the connection between the first sub-plate body 112 and the second sub-plate body 113 may be a direct connection, that is, the first sub-plate body 112 and the second sub-plate body 113 are directly in contact and connected. Alternatively, the connection between the first sub-plate body 112 and the second sub-plate body 113 may also be an indirect connection, that is, the first sub-plate body 112 and the second sub-plate body 113 are connected through other structural members, for example, indirectly connected through the middle plate 200.

Exemplarily, the second direction is perpendicular to the first direction.

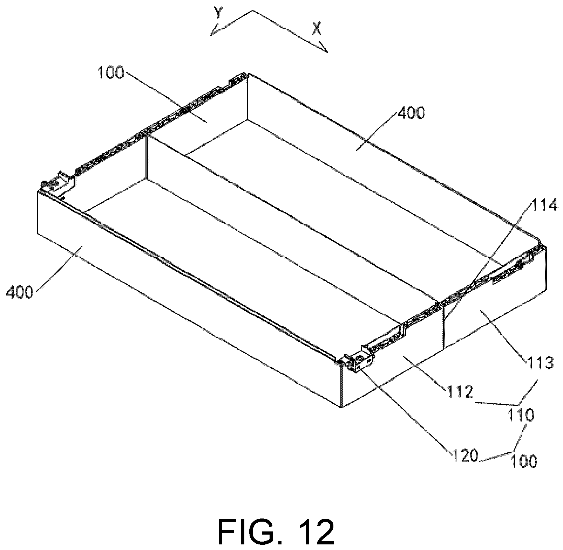

As shown in FIG. 12, FIG. 12 displays a perspective schematic view of the module frame of the battery module of this embodiment. The first sub-plate body 112 and the second sub-plate body 113 are spliced together to form the end plate body 110 with a straight plate structure. The first sub-plate body 112 is connected to one of the side plates 400 of the battery module, and the second sub-plate body 113 is connected to the other side plate 400 of the battery module.

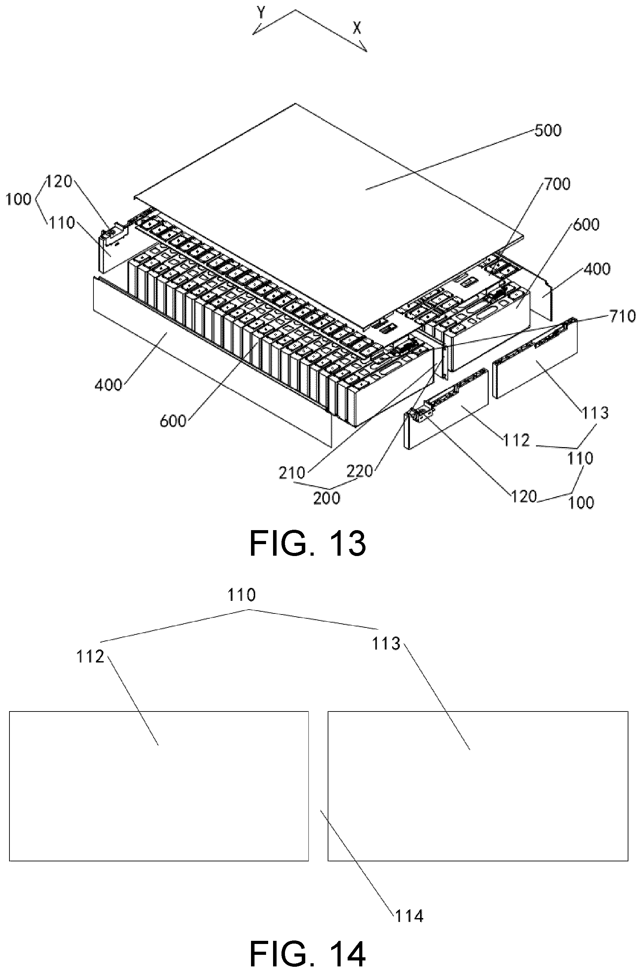

As shown in FIG. 13, FIG. 13 displays an exploded schematic view of the battery module of this embodiment. When assembling the middle plate 200 and the end plate body 110, the first sub-plate body 112 and the second sub-plate body 113 may first be kept at a larger interval distance in the second direction (e.g., Y direction in FIG. 13). A portion of the connection portion 220 of the middle plate 200 is inserted into the gap between the first sub-plate body 112 and the second sub-plate body 113, and this portion of the connection portion 220 may be aligned with the position of the insertion space 114 between the first sub-plate body 112 and the second sub-plate body 113. Afterwards, the first sub-plate body 112 and the second sub-plate body 113 are moved closer to each other in the second direction until the insertion space 114 is defined between the two. Herein, at least a portion of the connection portion 220 is located in the insertion space 114. Finally, the connection portion 220 of the middle plate 200 is welded to the first sub-plate body 112 and the second sub-plate body 113, and the insertion depth is ensured to meet the process requirements.

In this embodiment, since the first sub-plate body 112 and the second sub-plate body 113 are independent structures before being fixedly connected, the interval distance between the first sub-plate body 112 and the second sub-plate body 113 may be temporarily increased to facilitate the insertion of the connection portion 220 of the middle plate 200 between the two. After that, by fixedly connecting the first sub-plate body 112 and the second sub-plate body 113 to form the end plate body 110, the insertion and fitting between the end plate body 110 and the middle plate 200 may be completed.

For the structure of the insertion space 114, specifically, as shown in FIG. 14, FIG. 14 displays a schematic view of a first structure of the insertion space 114. In some embodiments, side walls of the first sub-plate body 112 and the second sub-plate body 113 that are close to each other are spaced apart as a whole to define a gap extending from an upper end to a lower end of the end plate body 110 between the first sub-plate body 112 and the second sub-plate body 113. The gap is constructed as the insertion space 114.

Exemplarily, the surfaces of the side walls of the first sub-plate body 112 and the second sub-plate body 113 that are close to each other may be planes.

Exemplarily, the first sub-plate body 112 and/or the second sub-plate body 113 may be attached to the plate surface of the connection portion 220.

Exemplarily, the first sub-plate body 112 and the second sub-plate body 113 may be fixedly connected through the connection portion 220, that is, the first sub-plate body 112 and the second sub-plate body 113 are fixedly connected to the connection portion 220 respectively.

In this embodiment, since the gap extends from the upper end to the lower end of the end plate body 110, that is, a size of the insertion space 114 in a vertical direction is large, it makes the connection portion 220 of the middle plate 200 easier to be inserted into the insertion space 114. Further, the first sub-plate body 112 and the second sub-plate body 113 may be attached to the plate surface of the connection portion 220 together, so the assembly gap 800 is further reduced and the welding quality is improved.

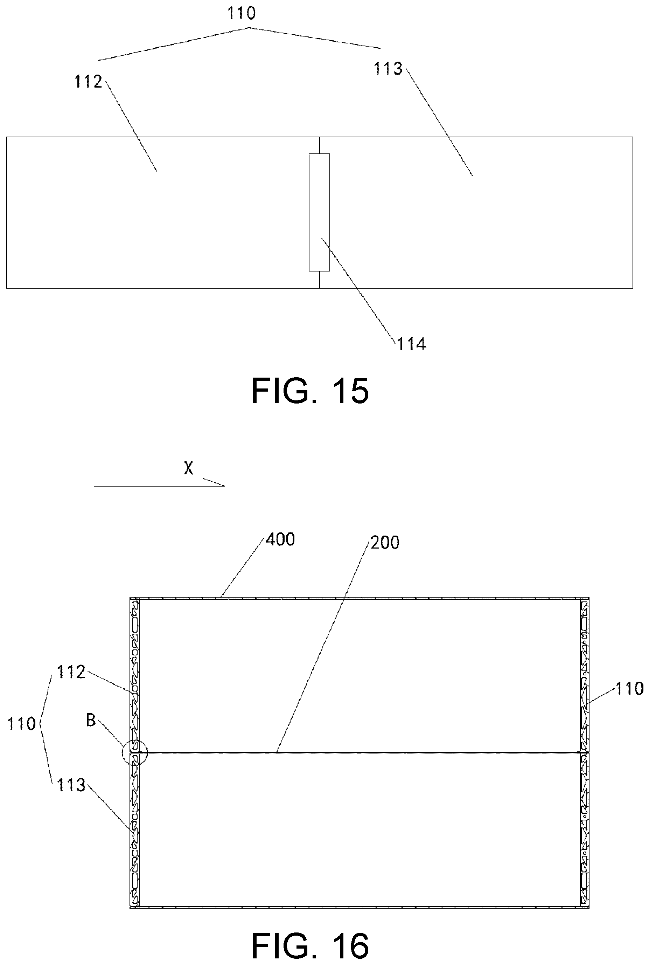

The insertion space 114 may have other structures besides the above structure. As shown in FIG. 15, FIG. 15 displays a schematic view of a second structure of the insertion space 114. In some embodiments, middle portions of the side walls of the first sub-plate body 112 and the second sub-plate body 113 that are close to each other are spaced apart, so as to define a through hole between the first sub-plate body 112 and the second sub-plate body 113, and the through hole is constructed as the insertion space 114.

Exemplarily, at least one of the side walls of the first sub-plate body 112 and the second sub-plate body 113 that are close to each other may have a groove arranged on its surface, and the groove may be used to define the through hole.

Exemplarily, the first sub-plate body 112 and the second sub-plate body 113 may be directly connected through contact.

According to the structure and direction shown in FIG. 15, the side walls of the first sub-plate body 112 and the second sub-plate body 113 that are close to each other may directly contact at positions near the upper end and the lower end, and the through hole is formed between the upper end and the lower end. When inserting the connection portion 220 between the first sub-plate body 112 and the second sub-plate body 113, the definition of the through hole may more easily position the connection portion 220 in the vertical direction, so that the relative position between the middle plate 200 and the end plate body 110 in the vertical direction is further ensured to meet the process requirements.

In combination with the foregoing content, if laser self-melting welding is adopted between the end plate body 110 and the middle plate 200, in order to improve the welding quality, it is then necessary to restrict the materials of the end plate body 110 and the middle plate 200. However, the Applicant has found that if laser wire-filling welding is adopted, even if both the end plate body 110 and the middle plate 200 use a 6 series aluminum profile, a higher welding quality may still be achieved.

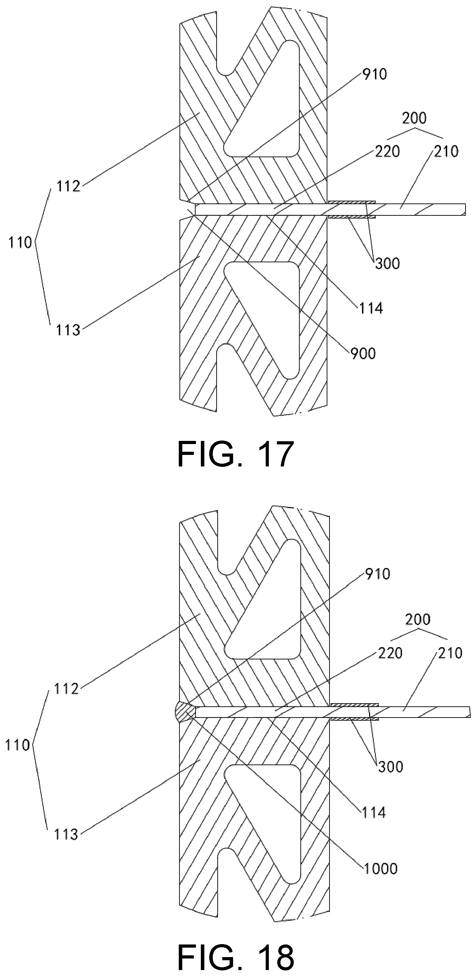

As shown in FIG. 16, FIG. 16 displays a top cross-sectional schematic view of another structure of the battery module. The overall relative position between the middle plate 200 and the end plate body 110 remains unchanged. In order to improve the welding quality of laser wire-filling welding, it is necessary to increase a contact area of the insertion and fitting between the connection portion 220 and the end plate body 110. Specifically, as shown in FIG. 17, FIG. 17 displays an enlarged schematic view of portion B in FIG. 16 before laser wire-filling welding. In some examples, the partition portion 210 is located outside the insertion space 114.

In this embodiment, in the second direction, an overlapping portion of the middle plate 200 and the end plate body 110 is the connection portion 220, which makes a length of a portion with a smaller gap between the two longer after the middle plate 200 and the end plate body 110 are inserted and fitted together. In this way, the probability of laser penetrating through the insertion space 114 is further reduced, so the welding quality between the middle plate 200 and the end plate body 110 is ensured.

Exemplarily, the light shielding structure 300 located on the plate surface of the partition portion 210 is located outside the insertion space 114 and close to the end plate body 110. The light shielding structure 300 being close to the end plate body 110 may shorten a transmission distance of the laser that penetrates through the insertion space 114 inside the battery module. As such, the risk of adverse effects on the internal components of the battery module by the laser that penetrates through the insertion space 114 is further reduced, and the reliability of the light shielding structure 300 in shielding the insertion space 114 is improved.

As shown in FIG. 17, in some embodiments, in the first direction, the connection portion 220 is inserted into the insertion space 114 through an opening on one side of the insertion space 114. In the insertion space 114, a welding space 900 is formed at the position between the end portion of the connection portion 220 and the opening on the other side of the insertion space 114.

Exemplarily, in the first direction, a length of the connection portion 220 is less than a thickness of the end plate body 110.

Taking the direction in FIG. 17 as an example for explanation, the connection portion 220 is inserted into the insertion space 114 through the opening on the right side of the insertion space 114, and the welding space 900 is formed between the end portion of the connection portion 220 and the opening on the left side of the insertion space 114. That is, the first sub-plate body 112, the second sub-plate body 113, and the end portion of the connection portion 220 form the welding space 900, with the opening of the welding space 900 facing the left side, that is, the exterior of the battery module.

As shown in FIG. 18, FIG. 18 displays an enlarged schematic view of portion B in FIG. 16 after laser wire-filling welding. During welding, a welding wire (e.g., 5 series aluminum profile welding wire) enters the welding space 900 and melts to form a welding fixing portion 1000 through laser irradiation, so a fixed connection among the first sub-plate body 112, the second sub-plate body 113, and the connection portion 220 is implemented.

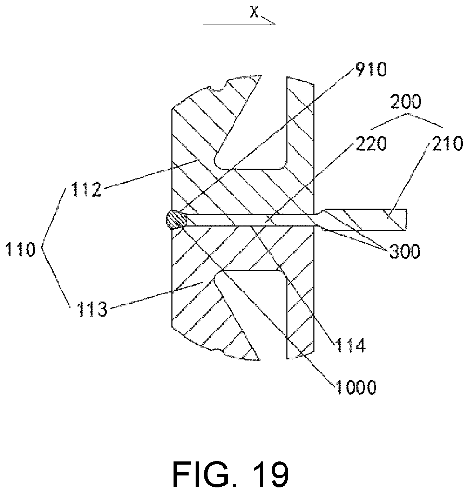

As shown in FIG. 19, FIG. 19 displays an enlarged schematic view of another structure of portion B in FIG. 16. In some embodiments, a welding groove 910 is provided at a position where the first sub-plate 112 is located in the welding space 900 and/or a position where the second sub-plate 113 is located in the welding space 900.

Arrangement of the welding groove 910 may increase an opening size of the welding space 900, so that the welding wire may enter into the welding space 900 easily, a more reliable welding fixing portion 1000 is formed, and welding quality is ensured.

Based on the same inventive concept, combining the description of the battery module in the above embodiments, this embodiment provides a battery pack having the corresponding technical effects of the battery module in the above embodiments, so description thereof is not repeated herein.

A battery pack includes the battery module as described in the above embodiments.

## Claims

1. A battery module, comprising:
two end plate assemblies (100), spaced apart in a first direction; and
a middle plate (200), connected between the two end plate assemblies (100), wherein the battery (100) is **characterized in that** the middle plate (200) comprises a partition portion (210) and a connection portion (220) distributed in a straight line in the first direction and in a same plane, and the middle plate (200) is inserted into and fitted with the corresponding end plate assembly (100) at least through the connection portion (220), wherein at least one side plate surface of the partition portion (210) has a light shielding structure (300) protruding from a plate surface of the connection portion (220).

2. The battery module according to claim 1, wherein each of the two end plate assemblies (100) comprises an end plate body (110) provided with a connection through hole (111), the connection through hole (111) comprises an insertion hole section (1111) and a guide hole section (1112), the connection portion (220) is inserted into and fitted with the end plate body (110) through the insertion hole section (1111), and the partition portion (210) extends into the guide hole section (1112),
at least a portion of the light shielding structure (300) is located in the guide hole section (1112).

3. The battery module according to claim 2, wherein the end plate body (110) is provided with a guide groove at a position of the guide hole section (1112), and the guide groove corresponds to at least a side plate surface of the partition portion (210).

4. The battery module according to claim 3, wherein the guide groove and the light shielding structure (300) are located at a same side of the partition portion (210).

5. The battery module according to claim 1, wherein the end plate body (110) comprises a first sub-plate body (112) and a second sub-plate body (113) which are linearly spaced and independent from each other in a second direction, the first sub-plate body (112) and the second sub-plate body (113) are fixedly connected, an insertion space (114) is defined between the first sub-plate body (112) and the second sub-plate body (113), the connection portion (220) is inserted into and fitted with the end plate body (110) through the insertion space (114), and the second direction intersects with the first direction.

6. The battery module according to claim 5, wherein side walls of the first sub-plate body (112) and the second sub-plate body (113) that are close to each other are spaced apart as a whole to define a gap extending from an upper end to a lower end of the end plate body (110) between the first sub-plate body (112) and the second sub-plate body (113), and the gap is constructed as the insertion space (114).

7. The battery module according to claim 5, wherein middle portions of side walls of the first sub-plate body (112) and the second sub-plate body (113) that are close to each other are spaced apart to define a through hole between the first sub-plate body (112) and the second sub-plate body (113), and the through hole is constructed as the insertion space (114).

8. The battery module according to claim 5, wherein the partition portion (210) is located outside the insertion space (114).

9. The battery module according to claim 5, wherein in the first direction, the connection portion (220) is inserted into the insertion space (114) through a side opening of the insertion space (114), and in the insertion space (114), a welding space (900) is formed at a position between an end portion of the connection portion (220) and another side opening of the insertion space (114).

10. The battery module according to claim 9, wherein a welding groove (910) is provided at a position where the first sub-plate (112) is located in the welding space (900) and/or a position where the second sub-plate (113) is located in the welding space (900).

11. The battery module according to claim 1, wherein the light shielding structure (300) comprises a light shielding sheet, and the light shielding sheet is fixed on a plate surface of the partition portion (210).

12. The battery module according to claim 1, wherein in the partition portion (210), at least a portion adjacent to the connection portion (220) has a thickness greater than a thickness of the connection portion (220) to form a step surface, and the light shielding structure (300) comprises the step surface.

13. A battery pack, comprising the battery module according to any one of claims 1-12.
